# EUROPÄISCHE PATENTANMELDUNG

(11) **EP 2 478 985 A1**
(43) Veröffentlichungstag der Anmeldung: **25.07.2012**
(21) Anmeldenummer: 12152418.5
(22) Anmeldetag: 25.01.2012
(51) Int. Cl.: B23D 55/08

(54) **Bandsägevorrichtung**

(30) Priorität: 25.01.2011 AT 992011
(71) Anmelder: Fill Gesellschaft m.b.H., 4942 Gurten (AT)
(72) Erfinder: Sehrschön, Harald, 4924 Waldzell (AT); Sieglhuber, Gerhard, 4961 Mühlheim am Inn (AT)
(74) Vertreter: Burger, Hannes

(57) **Zusammenfassung**

Die Erfindung betrifft eine Bandsägevorrichtung (1), umfassend einen Grundrahmen (2), zumindest zwei voneinander distanziert angeordnete Umlenkräder (3, 4), ein Antriebsmittel (5), welches mit zumindest einem der Umlenkräder (3, 4) in Antriebsverbindung steht und ein um die Umlenkräder (3, 4) endlos umlaufendes Bandsägeblatt (6). Das Bandsägeblatt (6) ist während des Anschneidvorganges in ein zu sägendes Werkstück (8) im Bereich der Sägeseite (9) in zumindest einer Anschnittführungsanordnung (14, 15) geführt. Die Anschnittführungsanordnung (14, 15) umfasst in Richtung einer Sägeblattdicke (20) voneinander distanziert angeordnete Führungselemente (16 bis 19) sowie einen Tragrahmen (21, 22), wobei das Bandsägeblatt (6) zwischen den Führungselementen (16 bis 19) hindurchgeführt ist. Die Anschnittführungsanordnung (14, 15) ist dabei zumindest bereichsweise in einem Überdeckungsbereich mit dem zu sägenden Werkstück (8) angeordnet.

## Beschreibung

Die Erfindung betrifft eine Bandsägevorrichtung umfassend einen Grundrahmen, zumindest zwei voneinander distanziert angeordnete Umlenkräder, ein Antriebsmittel, welches mit zumindest einem der Umlenkräder in Antriebsverbindung steht und ein um die Umlenkräder endlos umlaufendes Bandsägeblatt.

Beim Sägevorgang, insbesondere am Beginn des Anschnittvorganges in das zu sägende Werkstück kommt es häufig zu einer unruhigen und schwingenden Lage des Bandsägeblattes. Dies führt zu Formabweichungen sowie einem größeren Wert der Rautiefe im Anschnittbereich. Weiters sind Führungen vorgesehen, um das Sägeband definiert laufen zu lassen. Durch ein Spiel in den Führungen wird jedoch eine gewisse Bewegungsfreiheit des Bandsägeblattes ermöglicht. Durch diese Führungen wird jedoch das Schwingungsverhalten des Sägebandes während dem Anschnitt nicht gedämpft. Um diese Schwingungen zu dämpfen, wurden bislang sogenannte Anschnittsrampen eingesetzt. Unter einer Anschnittsrampe wird hierbei die Steigerung der Schnittgeschwindigkeit und des Vorschubes des Bandsägeblattes von einem geringeren Wert hin zu einem dazu höheren Wert verstanden. Somit ergibt sich im Anschnittbereich eine verminderte Vorschub- und Schnittgeschwindigkeit des Bandsägeblattes gegenüber einer im Block befindlichen Position des Sägeblattes. Dies führt zu einer erhöhten Produktionszeit, da nicht von Beginn an mit maximaler Vorschub- und Schnittgeschwindigkeit gearbeitet werden kann. Darüber hinaus kann es dabei auch zu einer hohen Geräuschentwicklung während des Sägevorganges kommen.

Die DE 10 2006 037 705 A beschreibt eine Sägevorrichtung mit einem Sägewerkzeug mit einem Lager, in dem das Sägewerkzeug gelagert ist. Weiters sind Antriebsmittel zur Erzeugung einer Bewegung des Sägewerkzeuges relativ zu dem Lager vorgesehen. Dabei ist das das Sägewerkzeug führende Lager als Fluidlager ausgebildet. Zur Erzeugung des Fluidlagers wird ein Flüssigkeitspolster zwischen dem Lager und dem Sägewerkzeug aufgebaut. Nachteilig dabei ist, dass nicht in allen Anwendungsfällen aufgrund des zugeführten Fluides ein Einsatz möglich war.

Der vorliegenden Erfindung liegt die Aufgabe zugrunde, eine Bandsägevorrichtung zu schaffen, mit welcher bereits beim Beginn des Anschnittvorganges eine verbesserte Oberflächenqualität bei erhöhter Formgenauigkeit im Schnittbereich und eine erhöhte Produktivität erzielbar ist.

Diese Aufgabe der Erfindung wird dadurch gelöst, dass das Bandsägeblatt während des Anschneidvorganges in ein zu sägendes Werkstück im Bereich der Sägeseite in zumindest einer Anschnittführungsanordnung geführt ist und die Anschnittführungsanordnung in Richtung einer Sägeblattdicke voneinander distanziert angeordnete Führungselemente sowie einen Tragrahmen umfasst, wobei das Bandsägeblatt zwischen den Führungselementen hindurchgeführt ist und dass die Anschnittführungsanordnung zumindest bereichsweise in einem Überdeckungsbereich mit dem zu sägenden Werkstück angeordnet ist. Der sich durch die Merkmale des Anspruches 1 ergebende Vorteil liegt darin, dass eine den Anschnittvorgang unterstützende Anschnittführungsanordnung vorgesehen ist, mit welcher das Bandsägeblatt direkt im Sägebereich geführt werden kann. Dadurch wird die freie Länge des Bandsägeblattes zwischen den Umlenkrädern sowie gegebenenfalls angeordneten Führungsanordnungen verkürzt und so gerade im Schnittbereich eine bessere Führung erzielt. Dadurch, dass der Bandkörper des Bandsägeblattes gerade beim Anschnittvorgang erhöhten Schwingungen ausgesetzt ist, werden diese durch die Anschnittführungsanordnung stark gedämpft bzw. überhaupt absorbiert. Damit wird ein ruhiger Bandlauf erzielt und so die gewünschte Genauigkeit und Oberflächengüte erreicht. Weiters kann dabei auch von Beginn an mit der vorgesehenen Vorschub- und Schnittgeschwindigkeit der Schneidvorgang durchgeführt werden.

Vorteilhaft ist auch eine weitere Ausführungsform nach Anspruch 2, da so gerade im Bereich des sägenden Eingriffs des Bandsägeblattes im Bereich des Werkstücks die zusätzliche Führung des Bandsägeblattes ermöglicht wird. So kann auch bei größeren Werkstücken eine einwandfreie Schnittqualität im Bereich des Anschnitts erzielt werden.

Vorteilhaft ist weiters eine Ausbildung nach Anspruch 3, da dadurch eine zusätzliche Verkürzung der freien Bandlänge erreicht wird, wodurch die Eigenschwingungen des Bandsägeblattes und die damit verbundene Auslenkung der Sägezähne minimiert bzw. überhaupt verhindert wird.

Durch die Ausbildung nach Anspruch 4 kann eine Anpassung an unterschiedliche Werkstückbreiten erfolgen. Dadurch ist eine noch besser Anpassung an unterschiedliche Schnittbedingungen möglich.

Nach einer anderen Ausführungsvariante gemäß Anspruch 5 wird eine exakte beidseitige Führung des Bandsägeblattes erreicht.

Vorteilhaft ist auch eine Weiterbildung nach Anspruch 6, da dadurch eine exakte geradlinige Ausrichtung und Führung des Bandsägeblattes erzielt werden kann.

Bei der Ausgestaltung nach Anspruch 7 ist von Vorteil, dass dadurch die Möglichkeit geschaffen wird, das Bandsägeblatt nur während des Anschnittvorganges zusätzlich zu führen und nach erfolgtem Anschnitt die Führungselemente außer Eingriff mit dem Bandsägeblatt zu bringen. Damit kann die Anschnittführungsanordnung nach Erreichen einer gewissen Einschnitttiefe vom Bandsägeblatt weg verstellt werden.

Durch die Weiterbildung nach Anspruch 8 wird erreicht, dass so im Bereich der Anschnittführungsanordnung eine nahezu vibrationsfreie Führung des Bandsägeblattes während dessen Durchlauf zwischen den Führungselementen ermöglicht wird. Durch diese exakte Führung wird gerade beim Anschnittvorgang das Entstehen von Vibrationen und Schwingungen im Bandsägeblatt gedämpft bzw. überhaupt verhindert.

Durch die Ausbildung nach Anspruch 9 kann rasch auf unterschiedliche Banddicken des Bandsägeblattes Bedacht genommen werden. Damit können Umrüstvorgänge minimiert bzw. überhaupt verhindert werden.

Vorteilhaft ist auch eine Ausbildung nach Anspruch 10, da so je nach Werkstoff des zu sägenden Werkstückes und dem verwendeten Bandmaterial des Bandsägeblattes dieses auf unterschiedlichste Einsatzbedingungen rasch abgestimmt werden kann.

Gemäß einer Ausbildung, wie im Anspruch 11 beschrieben, kann die Abnützung der Führungselemente durch das zu führende Bandsägeblatt herabgesetzt werden. Dadurch können höhere Standzeiten der Führungselemente erzielt werden.

Dabei erweist sich eine Ausgestaltung nach Anspruch 12 vorteilhaft, weil dadurch auch auf der von der Sägeseite abgewendeten Bandseite eine Verkürzung der freien Schwingungslänge zwischen den Umlenkrädern erzielbar ist. Damit kann auch hier das Auftreten von Schwingungen reduziert bzw. überhaupt minimiert werden.

Nach einer vorteilhaften Weiterbildung gemäß Anspruch 13 wird die Möglichkeit geschaffen, das Bandsägeblatt bezogen auf eine geradlinige Verbindung zwischen den Umlenkrädern davon abzulenken und so eine satte Anlage während dem Vorbeigleiten zu erzielen.

Schließlich ist aber auch eine Ausbildung, wie im Anspruch 14 beschrieben möglich, bei der die Auslenkung des Bandsägeblattes im Bereich von dessen rücklaufenden Abschnitts auf die von der Sägeseite abgewendete Seite erfolgt. Dadurch kann der die Umlenkräder verbindende Grundrahmen in diesem Bereich auch massiv ausgeführt werden, ohne dass das Bandsägeblatt während des Betriebes an diesem anschlägt.

Zum besseren Verständnis der Erfindung wird diese anhand der nachfolgenden Figuren näher erläutert.

Es zeigen jeweils in stark schematisch vereinfachter Darstellung:
- Fig. 1: eine Bandsägevorrichtung mit zusätzlicher Anschnittführungsanordnung, in Ansicht und stark schematisch vereinfachter Darstellung;
- Fig. 2: eine möglich Ausbildung einer Anschnittführungsanordnung mit angedeutetem Bandsägeblatt, in vereinfachter schaubildlicher Darstellung;
- Fig. 3: die Anschnittführungsanordnung nach Fig. 2, in Seitenansicht und vereinfachter Darstellung; Fig. 4 eine weitere mögliche Ausbildung einer Anschnittführungsanordnung, in vereinfachter schaubildlicher Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

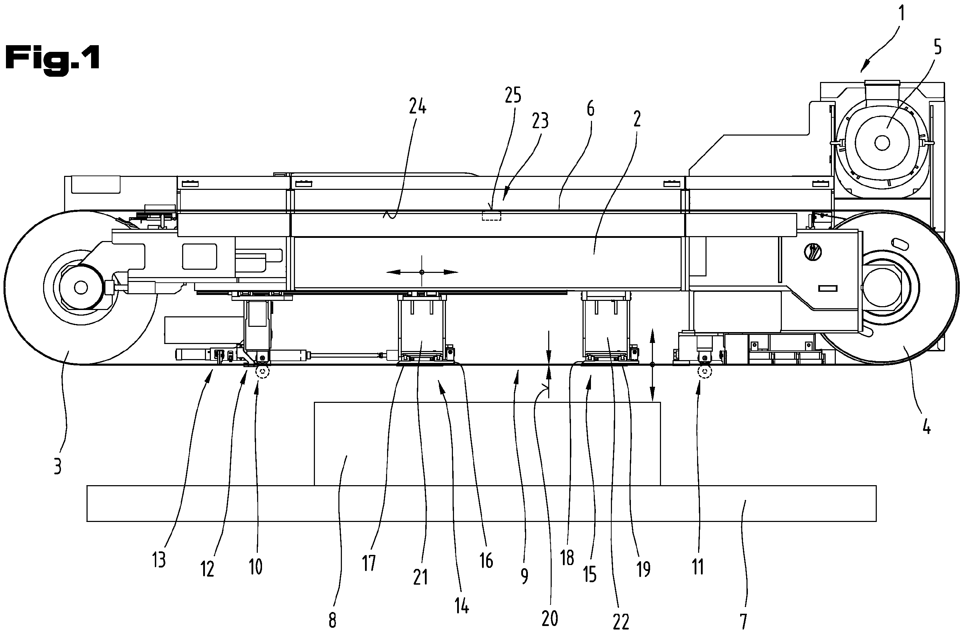

In der Fig. 1 ist schematisch vereinfacht eine Bandsägevorrichtung 1 gezeigt, von welcher hier nur die wesentlichsten Bauteile schematisch vereinfacht gezeigt bzw. angedeutet sind. Die Bandsägevorrichtung 1 umfasst hier einen vereinfacht dargestellten Grundrahmen 2, an welchem zumindest zwei voneinander distanziert angeordnete Umlenkräder 3, 4 angeordnet bzw. gelagert sind. Zumindest einem der Umlenkräder 3, 4 - im vorliegenden Ausführungsbeispiel dem Umlenkrad 4 - ist ein Antriebsmittel 5 zugeordnet bzw. steht das Antriebsmittel 5 mit diesem in Antriebs- bzw. Wirkverbindung. Dem anderen Umlenkrad 3 kann eine Stellvorrichtung zugeordnet sein, um die Distanz zwischen den beiden Umlenkrädern 3, 4 einstell- bzw. nachstellbar auszuführen. Damit können beispielsweise Banddehnungen, elastische Verformungen usw. ausgeglichen werden.

Die Umlenkräder 3, 4 sind weiters von einem endlos umlaufenden Bandsägeblatt 6 umschlungen bzw. läuft dieses während des Sägebetriebes um diese um.

Weiters ist hier noch vereinfacht dargestellt, dass unterhalb der Bandsägevorrichtung 1 eine Auflage 7 für ein zu sägendes Werkstück 8 angeordnet ist. Die Auflage 7 kann beispielsweise durch einen Maschinentisch oder dergleichen gebildet sein. Um den Schnittvorgang durchführen zu können, ist es möglich, entweder die Bandsägevorrichtung 1 relativ gegenüber der Auflage 7 zu verstellen oder aber die Auflage 7 relativ gegenüber der Bandsägevorrichtung 1 zu verlagern. Es wäre aber unabhängig davon möglich, eine kombinierte Bewegung zwischen der Bandsägevorrichtung 1 und der Auflage 7 durchzuführen. Damit kann die Vorschubbewegung während des Schnittvorganges eingestellt sowie auch die notwendigen Zustell- und Justierverstellungen durchgeführt werden.

Das um die Umlenkräder 3, 4 umlaufende Bandsägeblatt 6 weist im Bereich des Werkstückes 8 eine sogenannte Sägeseite 9 auf. Hier wird unter Sägeseite 9 verstanden, dass dies jene Seite des umlaufenden Bandsägeblattes 6 ist, welche für den durchzuführenden Schneidvorgang mit dem Werkstück 8 in Eingriff gebracht wird.

Das umlaufende Bandsägeblatt 6 kann im Bereich auf der von der Sägeseite 9 abgewendeten Seite als rücklaufender Abschnitt bzw. auch als Leertrum bezeichnet werden.

Zur Führung und Unterstützung des Bandsägeblattes 6 können im Bereich der Sägeseite 9 zumindest eine, im vorliegenden Ausführungsbeispiel zwei erste Führungsanordnungen 10, 11 vorgesehen sein, welche in Längsrichtung der Sägeseite 9 voneinander distanziert angeordnet sind. Bevorzugt erfolgt dabei eine Abstützung des Bandsägeblattes 6 auf jener Seite der Sägeseite 9, welche dem rücklaufenden Abschnitt des Bandsägeblattes 6 zugewendet ist. Diese erste bzw. die ersten Führungsanordnungen 10, 11 sind zumeist durch Umlenkrollen gebildet, welche am Bandsägeblatt 6 zur Anlage gebracht werden. Es ist aber auch möglich, dass bei kurzen Werkstücken 8 auf derartige Führungsanordnungen 10, 11 überhaupt verzichtet werden kann.

Weiters ist noch im linken Bereich der Bandsägevorrichtung 1 bei der Führungsanordnung 10 dargestellt, dass dieser unmittelbar benachbart eine Zuführvorrichtung 12, beispielsweise für ein Kühl- und/oder Schmiermittel, zugeordnet ist. Damit kann das Bandsägeblatt 6, falls dies bei dem zu sägenden Werkstück 8 notwendig ist, entsprechend versorgt und gekühlt werden. Zur Überwachung des ordnungsgemäßen Bandsägeblattverlaufes ist es auch noch möglich, dem Bandsägeblatt 6 eine Überwachungseinheit 13 zuzuordnen. Diese kann beispielsweise durch einen Schalter, einen Sensor oder dergleichen gebildet sein, mit welchem die ordnungsgemäße Lage des Bandsägeblattes 6 während des Sägebetriebes ermittelt und in weiterer Folge überwacht werden kann.

Bei dieser hier dargestellten Bandsägevorrichtung 1 ist dem Bandsägeblatt 6 im Bereich der Sägeseite 9 zusätzlich zur ersten Führungsanordnung 10, 11 zumindest eine Anschnittführungsanordnung 14, 15 zugeordnet, in welcher das Bandsägeblatt 6 zumindest während des Anschneidvorganges in das zu sägende Werkstück 8 geführt ist. Die Anordnung der Anschnittführungsanordnung 14, 15 erfolgt derart, dass diese zumindest bereichsweise in einem

Überdeckungsbereich mit dem zu sägenden Werkstück 8 angeordnet ist. Dies bedeutet, dass die zumindest eine Anschnittführungsanordnung 14, 15 während des Anschnittvorganges auf der von den Zähnen des Bandsägeblattes 6 abgewendeten Seite und somit hinterhalb des zu sägenden Werkstückes 8 in dem von diesem gebildeten Querschnitt angeordnet ist.

Die Anzahl der Anschnittführungsanordnungen 14, 15 kann in Abhängigkeit von der zu sägenden Werkstückbreite frei gewählt werden. Es wäre aber auch möglich, nur eine einzige Anschnittführungsanordnung 14, 15 einzusetzen, deren Längserstreckung in Richtung des Bandsägeblattes 6 in etwa der Werkstückbreite entspricht. Damit wird über den Großteil der Eingriffslänge des Bandsägeblattes 6 am zu sägenden Werkstück 8 eine durchgehende Führung während des Anschnittvorganges erzielt.

Zur Führung des Bandsägeblattes 6 im Bereich der Anschnittführungsanordnungen 14, 15 umfassen diese jeweils eigene Führungselemente 16 bis 19, zwischen welchen das Bandsägeblatt 6 hindurchgeführt ist. Dabei sind die jeweils zusammengehörigen bzw. zusammenwirkenden Führungselemente 16, 17 bzw. 18, 19 in Richtung einer Sägeblattdicke 20 voneinander distanziert. Weiters umfasst jede der Anschnittführungsanordnungen 14, 15 auch noch einen eigenen Tragrahmen 21, 22, an welchem jeweils die Führungselemente 16 bis 19 angeordnet bzw. daran gehalten sind.

Wie hier zu ersehen ist, ist die bzw. sind die Anschnittführungsanordnungen 14, 15 in einem Längsabschnitt des Bandsägeblattes 6 zwischen den Umlenkrädern 3, 4 angeordnet, welcher dem zu sägenden Werkstück 8 zuwendbar ist. Dabei handelt es sich um die zuvor beschriebe Sägeseite 9 des Bandsägeblattes 6. Weiters ist hier noch vereinfacht dargestellt, dass die ersten Führungsanordnungen 10, 11 im Bereich der beiden Umlenkräder 3, 4 angeordnet bzw. mit dem Grundrahmen 2 bzw. einem zum Grundrahmen 2 gehörenden Bauteil verbunden sind.

Um während des Anschnittvorganges die gewünschte Führung zu erzielen, ist es vorteilhaft, wenn die Anschnittführungsanordnung 14, 15 in Längsrichtung des Bandsägeblattes 6 gesehen, zwischen den voneinander distanziert angeordneten ersten Führungsanordnungen 10, 11 angeordnet ist. Weiters ist hier noch vereinfacht dargestellt, dass die erste Führungsanordnung 10 in Längsrichtung des Bandsägeblattes 6 gesehen, relativ gegenüber dem Grundrahmen 2 verstellbar an diesem geführt gelagert ist. Die weitere der ersten Führungsanordnungen 11 kann beispielsweise feststehend mit dem Grundrahmen 2 verbunden sein.

Wie weiters hier noch zu ersehen ist, kann auch eine der Anschnittführungsanordnungen 14, 15 - im vorliegenden Ausführungsbeispiel die Anschnittführungsanordnung 14 - in Längsrichtung des Bandsägeblattes 6 gesehen, relativ bezüglich des Grundrahmens 2 an diesem verstellbar geführt sein kann. Damit wird es möglich, den Abstand bzw. die Distanz zwischen den beiden Anschnittführungsanordnungen 14, 15 in Richtung der Längserstreckung des Bandsägeblattes 6 zu variieren. Diese Verstellbewegung kann beispielsweise durch einen Stellantrieb, wie beispielsweise eine Zylinder-Kolbenanordnung, eine Spindelanordnung, einen Schrittmotor oder dergleichen erfolgen. Die Verstellmöglichkeiten der Führungselemente 16 bis 19 relativ bezüglich deren Tragrahmen 21, 22 werden in den nachfolgenden Figuren noch detailliert beschrieben.

Es ist aber auch noch möglich, die verstellbar gelagerte Anschnittführungsanordnung 14 mit der ersten Führungsanordnung 10 zu koppeln, um eine gemeinsame Verstellbewegung durchführen zu können. Die Verbindung kann z.B. mittels einer nicht näher bezeichneten Koppelstange erfolgen. Damit kann wiederum auf die Werkstückbreite Bedacht genommen werden.

Weiters ist in der Fig. 1 noch vereinfacht dargestellt, dass in einem auf der von der Sägeseite 9 abgewendeten und den rücklaufenden Abschnitt bildenden Bereich des Bandsägeblattes 6 ein Stützelement 23 angeordnet ist, an welchem eine Flachseite 24 des Bandsägeblattes 6 anliegend entlang gleitet. Zusätzlich ist es auch noch möglich, dass das Stützelement 23 in Richtung der Sägeblattdicke 20 verstellbar am Grundrahmen 2 der Bandsägevorrichtung 1 geführt und/oder gehaltert ist. Das in der Fig. 1 gezeigte Stützelement 23 ist in etwa in der halben Distanz zwischen den beiden Umlenkrädern 3, 4 angeordnet und verkürzt somit die freie Schwingungslänge des Bandsägeblattes 6 zwischen den Umlenkrädern 3, 4. Bevorzugt wird das Stützelement 23 auf jener Seite des Bandsägeblattes 6 angeordnet, welche der Sägeseite 9 zugewendet ist. Dies bedeutet, dass das Stützelement 23 ausgehend von der Sägeseite 9 hin am Bandsägeblatt 6 anliegt.

Unabhängig davon wäre es aber auch noch möglich, das Stützelement 23 selbsttätig einstellbar am Grundrahmen 2 unter Zwischenschaltung eines Federelements an die Flachseite 24 des Bandsägeblattes 6 anzudrücken. Damit wird erreicht, dass in jedem Fall eine sichere Anlage des Stützelements 23 an der Flachseite 24 des Bandsägeblattes 6 erzielt wird. Bevorzugt wird das Stützelement 23 derart bezüglich des Bandsägeblattes 6 angeordnet, dass dieses mit seiner Anlagefläche 25 in einer die Umlenkräder 3, 4 verbindenden und tangential anliegenden Gerade fluchtet. Um eine gewisse Vorspannung zu erreichen, wäre es auch noch möglich, dass die Anlagefläche 25 über die gedachte Gerade auf die von der Sägeseite 9 abgewendete Richtung darüber hinaus vorragt.

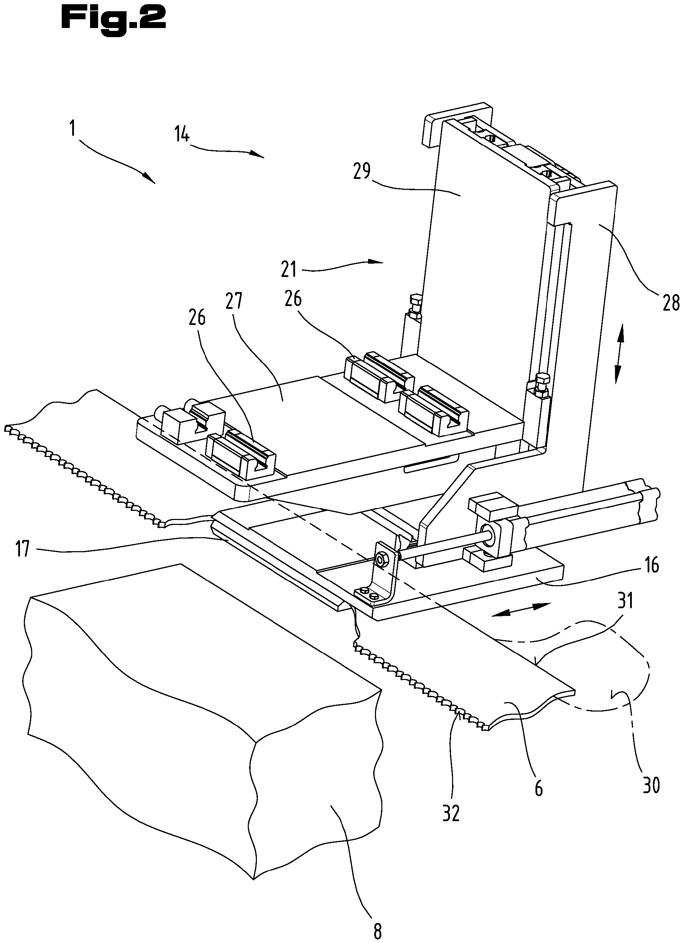

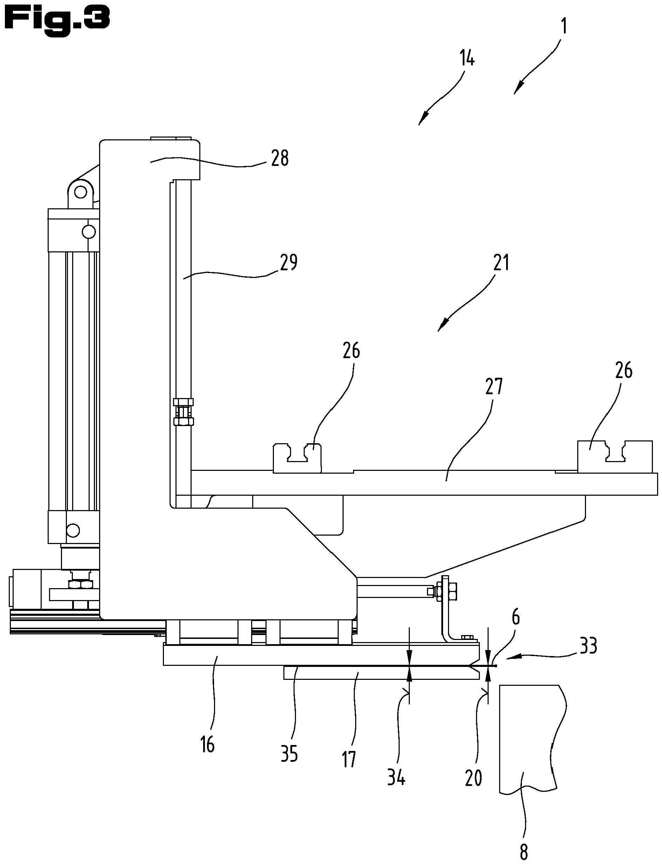

In den Fig. 2 und 3 ist eine mögliche und gegebenenfalls für sich eigenständige Ausführungsform einer Anschnittführungsanordnung 14 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Die hier dargestellte Anschnittführungsanordnung 14 weist im Bereich ihres Tragrahmens 21, welcher im Querschnitt in etwa L-förmig ausgebildet ist, Gleitelemente 26 auf, welche an einem Schenkel 27 angeordnet sind. Dieser erste Schenkel 27 ist dabei bevorzugt parallel bezüglich des Bandsägeblattes 6 ausgerichtet und mit seiner vom Bandsägeblatt 6 der Sägeseite 9 abgewendeten Seite, beispielsweise an einer Führungsschiene, welche am Grundrahmen 2 angeordnet ist, verstellbar geführt gelagert. Diese Verstellmöglichkeit ist in der Fig. 1 schematisch durch einen Doppelpfeil im Bereich der ersten Anschnittführungsanordnung 14 dargestellt. Die beiden Führungselemente 16, 17 der ersten Anschnittführungsanordnung 14 sind ihrerseits in zwei Raumrichtungen relativ bezüglich des Bandsägeblattes 6 verstellbar am Tragrahmen 21 geführt. Dies erfolgt im vorliegenden Ausführungsbeispiel unter Zwischenschaltung eines Rahmenteils 28, welcher seinerseits in Richtung der Sägeblattdicke 20 verstellbar an einem weiteren Schenkel 29 des Tragrahmens 1 daran geführt gelagert ist. Damit wird es möglich, den Rahmenteil 28 sowie die damit verbundenen Führungselemente 16, 17 in senkrechter Richtung bezüglich einer durch das Bandsägeblatt 6 definierten Ebene 30 zu verstellen. Dies ist mit einem Doppelpfeil seitlich des Schenkels 29 angedeutet. Um eine gewisse Anschlagbegrenzung des Verstellweges zu erzielen, ist es möglich, im Bereich des Schenkels 29 justierbare, jedoch nicht näher bezeichnete Anschläge für den Rahmenteil 28 vorzusehen. Damit können bei einem geringen Justieraufwand die beiden zusammenwirkenden Führungselemente 16, 17 soweit hin in Richtung zum Bandsägeblatt 6 verstellt werden, dass das Bandsägeblatt 6 zwischen den beiden einander zugewendeten sowie gegenüberliegenden Führungselementen 16, 17 aufgenommen und anschließend geführt werden kann. Weiters ist in der Fig. 2 noch vereinfacht dargestellt, dass die beiden Führungselemente 16, 17 auch in einer parallelen Richtung bezüglich der Ebene 30 relativ gegenüber dem Rahmenteil 28 und somit auch gegenüber dem Tragrahmen 21 verstellbar geführt sind.

Aus Übersichtlichkeitsgründen wurde auf die Darstellung der Führungen zwischen dem Tragrahmen 21 und dem Rahmenteil 28 sowie zwischen dem Rahmenteil 28 und den Führungselementen 16, 17 verzichtet. Die Verstellbewegung zwischen den einzeln zuvor beschriebenen Bauteilen kann beispielsweise durch druckmittelbetätigte Stellelemente, Schrittmotoren, Bandantriebe oder dergleichen erfolgen.

Unabhängig davon wäre es aber auch noch möglich, die Verstellbewegung der beiden Führungselemente 16, 17 in paralleler Richtung bezüglich der Ebene 30 derart zu gestalten, dass die Führungselemente 16, 17 nach erfolgtem Anschnitt am Werkstück 8 zur Anlage kommen und beim Fortsetzen des Schnittvorganges automatisch außer Eingriff mit dem zu führenden Bandsägeblatt 6 kommen. Dies könnte beispielsweise durch eine Führung in Verbindung mit einem federbeaufschlagten Stellelement durchgeführt werden. Dies könnte z.B. in Form eines Pneumatikzylinders erfolgen, welcher mit einem Druckbegrenzer gekoppelt ist. Steigt der Innendruck an, wird über ein Überdruckventil der aufgebaute Kompressionsdruck abgebaut und es herrscht stets ein voreinstellbarer Systemdruck zur Verfügung. Wird nach einem vorbestimmten Verfahrweg infolge des Schnittvorganges ein Endschalter betätigt, kann bzw. können die Anschnittführungsanordnungen 14, 15 vom Werkstück 8 in der Ebene 30 zurückverstellt und anschließend nach Freigabe des Bandsägeblattes 6 angehoben werden. Weiters könnten die Führungselemente 16 bis 19 der Anschnittführungsanordnungen 14, 15 anstelle einer Linearbewegung auch durch eine Schwenkbewegung um eine zur Ebene 30 senkrecht ausgerichtete Achse außer Eingriff mit dem Bandsägeblatt 6 gebracht werden. Um die Dicke bzw. Stärke des abzusägenden Teils des Werkstücks 8 relativ groß und frei wählen zu können, ist es möglich, die Anschnittführungsanordnungen 14, 15 aus dem Lichtraumprofil des Sägefensters zwischen dem Bandsägeblatt 6 und dem Grundrahmen 2 heraus zu verstellen.

Wie bereits zuvor beschrieben, sind die Führungselemente 16, 17 der Anschnittführungsanordnung 14 bezüglich der Längserstreckung des Bandsägeblatt 6 einander gegenüberliegenden und somit zusammenwirkend angeordnet.

Wie am besten aus einer Zusammenschau der Fig. 1 bis 3 zu ersehen ist, sind die jeweils zusammengehörigen Führungselemente 16, 17 bzw. 18, 19 der Anschnittführungsanordnung 14, 15 jeweils gemeinsam bezüglich deren Tragrahmen 21, 22 an diesem, gegebenenfalls unter Zwischenschaltung des Rahmenteils 28, in Richtung der Sägeblattdicke 20 verstellbar geführt. Diese Verstellbewegung erfolgt in senkrechter Richtung bezogen auf die Ebene 30, welche durch das Bandsägeblatt 6 definiert wird. Die Verstellbewegung erfolgt unter Zwischenschaltung des Rahmenteils 28, welcher geführt am Schenkel 29 des Tragrahmens 21 gelagert ist. Damit kann bei einem horizontal verlaufenden Bandsägeblattabschnitt im Bereich der Sägeseite 9 die vertikale Anpassung der das Bandsägeblatt 6 führenden Führungselemente 16, 17 bzw. 18 19 höhenmäßig erfolgen.

Wesentlich dabei ist, dass die jeweils zusammengehörigen Führungselemente 16, 17 bzw. 18, 19 in ihrer Lage relativ bezüglich des Bandsägeblattes 6 in senkrechter Richtung bezüglich der Ebene 30 gegenüber dem Grundrahmen 2 verstellbar sind.

Weiters sind die jeweils zusammengehörigen Führungselemente 16, 17 bzw. 18, 19 der beiden Anschnittführungsanordnungen 14, 15 gemeinsam bezüglich des Tragrahmens 21, 22 in paralleler Richtung bezüglich der durch das Bandsägeblatt 6 definierten Ebene verstellbar geführt. Damit wird es möglich, das Bandsägeblatt 6 ausgehend von dessen Bandrücken 31 zu erfassen und somit zu führen. Nach erfolgtem Anschnittvorgang können dann die Führungselemente 16 bis 19 relativ gegenüber deren Tragrahmen 21, 22 in paralleler Richtung bezüglich der Ebene 30 auf die von einer Zahnseite 32 abgewendete Richtung des Bandsägeblattes 6 wegverstellt werden. Dies erfolgt wiederum unter Zwischenschaltung des Rahmenteils 28, an welchem beim vorliegenden Ausführungsbeispiel das Führungselement 16 geführt gelagert ist. Das weitere Führungselement 17 ist mit dem am Rahmenteil 28 gelagerten Führungselement 16 verbunden.

Wie nun besser aus der Fig. 3 zu ersehen ist, definieren die einander gegenüberliegenden Führungselemente 16, 17 zwischen sich in Richtung der Sägeblattdicke 20 gesehen, einen Spalt 33, dessen Weite 34 zumindest der Sägeblattdicke 20 entspricht oder um bis zu 0,2 mm, insbesondere 0,1 mm, größer ist.

Zur Einstellung des Spaltes 33, insbesondere dessen Weite 34 und der Verbindung der beiden Führungselemente 16, 17 kann im Bereich des Bandrückens 31 des Bandsägeblattes 6 zwischen den beiden Führungselementen 16, 17 ein Distanzelement 35 angeordnet sein. Dieses legt exakt die Weite 34 des Spaltes 33 fest. Im Bereich des Distanzelementes 35 können dann die beiden Führungselemente 16, 17 miteinander verbunden sein. Das Bandsägeblatt 6 kann dann, falls dies für den Anschnittvorgang gewünscht ist, vom Spalt 33 zwischen den beiden Führungselementen 16, 17 aufgenommen und solange geführt werden, bis dass das Bandsägeblatt 6 in einer ausreichenden Tiefe in das zu sägende Werkstück 8 eingedrungen ist. Erfolgt eine ausreichende Führung des Bandsägeblattes 6 durch den eingebrachten Sägespalt des Werkstücks 8, können dann die Führungselemente 16, 17 bzw. 18, 19 vom Bandsägeblatt wegverstellt werden und befinden sich dann außer Führungseingriff mit diesem.

Um eine Anpassung der Weite 34 des Spaltes 33 zwischen den Führungselementen 16, 17 bzw. 18, 19 zu ermöglichen, ist es vorteilhaft, wenn die Weite 34 des Spaltes 33 zwischen diesen einstellbar ausgebildet ist. So könnte beispielsweise das Distanzelement 35 aus einem elastisch verformbaren Werkstoff mit ausreichender Festigkeit gebildet sein, welches zur Einstellung der Weite 34 des Spaltes 33 entsprechend komprimiert bzw. entlastet wird, wodurch eine Einstellung erfolgen kann.

Zusätzlich kann auch noch der Bandrücken 31 während des Anschnittbeginns am Distanzelement 35 abgestützt sein. Dabei ist ein Abstand des Distanzelements 35 im Hinblick auf die gesamte Breite des Bandsägeblattes 6 zu wählen, damit die Zähne des Bandsägeblattes 6 nicht mit Enden der Führungselemente 16 bis 19 kollidieren. Dafür ist eine sich erweiternde Abfasung ausgehend vom Spalt 33 vorgesehen. Damit wird über die nahezu gesamte Breite des Bandsägeblattes 6 eine Führung sowohl in Richtung der Sägeblattdicke 20 als auch im Bereich des Bandrückens 31 erzielt. So kann eine Auslenkung des Bandsägeblattes 6 in Richtung der Bandbreite gesehen, vermindert bzw. überhaupt verhindert werden.

Bei diesem Ausführungsbeispiel ist gezeigt, dass die Führungselemente 16, 17 plattenförmig ausgebildet sind. So wäre es möglich, die Führungselemente 16 bis 19 aus der Gruppe von Rollen, Luftpolster, Platten wie geschliffene Metallplatten, Hartmetallplatten, Kunststoffplatten zu wählen.

Zusätzlich ist es auch noch möglich, dass zwischen die Führungselemente 16 bis 19 und das Bandsägeblatt 6 ein die auftretende Reibungskraft reduzierendes Mittel eingebracht ist bzw. wird. Dieses die Reibungskraft reduzierende Mittel kann beispielsweise ein Schmiermittel aber auch ein das Bandsägeblatt 6 während des Sägevorganges kühlendes Mittel sein. Dabei ist wieder auf den das Werkstück 8 bildenden Werkstoff Bedacht zu nehmen.

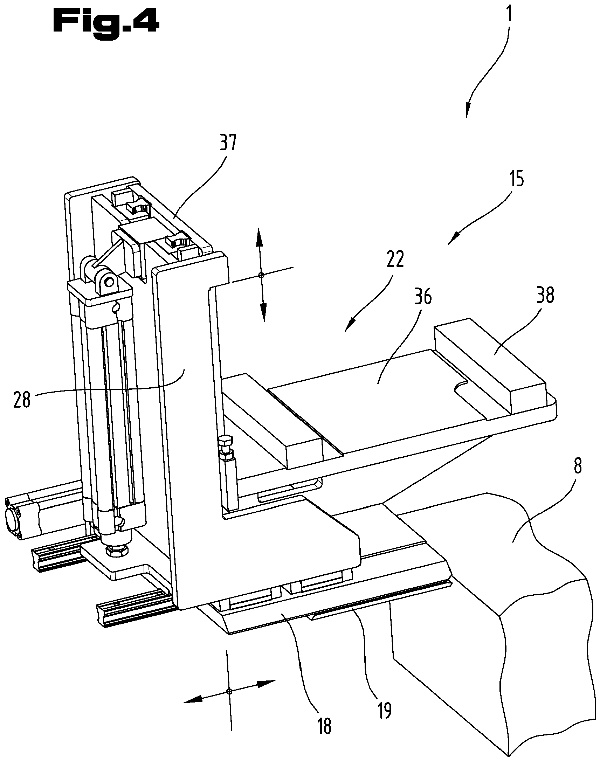

In der Fig. 4 ist eine weitere und gegebenenfalls für sich eigenständige Ausführungsform der Anschnittführungsanordnungen gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangen Fig. 1 bis 3 hingewiesen bzw. Bezug genommen.

Die in der Fig. 4 dargestellte Anschnittführungsanordnung 15 ist im Prinzip baugleich zu der zuvor detailliert in den Fig. 2 und 3 beschriebenen Anschnittführungsanordnung 14 ausgebildet.

Der Tragrahmen 22 umfasst hier die beiden winkelig zueinander ausgerichteten Schenkel 36, 37, welche den zuvor beschriebenen Schenkel 27 und 29 entsprechen. Am hier vertikal ausgerichteten Schenkel 37 ist der Rahmenteil 28 verstellbar geführt gelagert, an welchem die beiden Führungselemente 18, 19 gehaltert sind. Der Rahmenteil 28 ist wiederum relativ gegenüber dem Tragrahmen 22 in Richtung der Sägeblattdicke 20 verstellbar.

Im Gegensatz zu der zuvor beschriebenen Ausführungsform in den Fig. 2 und 3 ist hier der Schenkel 36 über Kupplungsmittel 38 feststehend mit dem Grundrahmen 2 der Bandsägevorrichtung 1 verbunden. An sonst entspricht diese Ausbildung jener, wie diese zuvor in den Fig. 2 und 3 für die Anschnittführungsanordnung 14 beschrieben worden ist.

Die Ausführungsbeispiele zeigen mögliche Ausführungsvarianten der Bandsägevorrichtung 1, insbesondere der Anschnittführungsanordnung 14, 15, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Bandsägevorrichtung 1, insbesondere deren Anschnittführungsanordnung 14, 15, diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Vor allem können die einzelnen in den Fig. 1; 2, 3; 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

1 Bandsägevorrichtung 2 Grundrahmen 3 Umlenkrad 4 Umlenkrad 5 Antriebsmittel 6 Bandsägeblatt 7 Auflage 8 Werkstück 9 Sägeseite 10 Führungsanordnung
- 11: Führungsanordnung
- 12: Zuführvorrichtung 13 Überwachungseinheit 14 Anschnittführungsanordnung
- 15: Anschnittführungsanordnung 16 Führungselement 17 Führungselement 18 Führungselement 19 Führungselement 20 Sägeblattdicke 21 Tragrahmen 22 Tragrahmen 23 Stützelement 24 Flachseite 25 Anlagefläche 26 Gleitelement 27 Schenkel 28 Rahmenteil 29 Schenkel 30 Ebene 31 Bandrücken 32 Zahnseite 33 Spalt 34 Weite 35 Distanzelement 36 Schenkel 37 Schenkel 38 Kupplungsmittel

## Patentansprüche

1. Bandsägevorrichtung (1) umfassend einen Grundrahmen (2), zumindest zwei voneinander distanziert angeordnete Umlenkräder (3, 4), ein Antriebsmittel (5), welches mit zumindest einem der Umlenkräder (3, 4) in Antriebsverbindung steht und ein um die Umlenkräder (3, 4) endlos umlaufendes Bandsägeblatt (6), **dadurch gekennzeichnet, dass** das Bandsägeblatt (6) während des Anschneidvorganges in ein zu sägendes Werkstück (8) im Bereich der Sägeseite (9) in zumindest einer Anschnittführungsanordnung (14, 15) geführt ist und die Anschnittführungsanordnung (14, 15) in Richtung einer Sägeblattdicke (20) voneinander distanziert angeordnete Führungselemente (16 bis 19) sowie einen Tragrahmen (21, 22) umfasst, wobei das Bandsägeblatt (6) zwischen den Führungselementen (16 bis 19) hindurchgeführt ist und dass die Anschnittführungsanordnung (14, 15) zumindest bereichsweise in einem Überdeckungsbereich mit dem zu sägenden Werkstück (8) angeordnet ist.

2. Bandsägevorrichtung (1) nach Anspruch 1, **dadurch gekennzeichnet, dass** die Anschnittführungsanordnung (14, 15) in einem Längsabschnitt des Bandsägeblattes (6) zwischen den Umlenkrädern (3, 4) angeordnet ist, welcher dem zu sägenden Werkstück (8) zuwendbar ist.

3. Bandsägevorrichtung (1) nach Anspruch 1 oder 2, **dadurch gekennzeichnet, dass** die Anschnittführungsanordnung (14, 15) in Längsrichtung des Bandsägeblattes (6) gesehen, zwischen voneinander distanziert angeordneten Führungsanordnungen (10, 11) angeordnet ist.

4. Bandsägevorrichtung (1) nach einem der vorhergehenden Ansprüche, **dadurch gekennzeichnet, dass** zumindest eine der Anschnittführungsanordnungen (14, 15) in Längsrichtung des Bandsägeblattes (6) gesehen relativ bezüglich des Grundrahmens (2) an diesem verstellbar geführt ist.

5. Bandsägevorrichtung (1) nach einem der vorhergehenden Ansprüche, **dadurch gekennzeichnet, dass** die Führungselemente (16 bis 19) der Anschnittführungsanordnung (14, 15) bezüglich der Längserstreckung des Bandsägeblattes (6) gesehen einander gegenüberliegend angeordnet sind.

6. Bandsägevorrichtung (1) nach einem der vorhergehenden Ansprüche, **dadurch gekennzeichnet, dass** die zusammengehörigen Führungselemente (16, 17; 18, 19) der Anschnittführungsanordnung (14, 15) gemeinsam bezüglich des Tragrahmens (21, 22) in Richtung der Sägeblattdicke (20) verstellbar geführt sind.

7. Bandsägevorrichtung (1) nach einem der vorhergehenden Ansprüche, **dadurch gekennzeichnet, dass** die zusammengehörigen Führungselemente (16, 17; 18, 19) der Anschnittführungsanordnung (14, 15) gemeinsam bezüglich des Tragrahmens (21, 22) in paralleler Richtung bezüglich einer durch das Bandsägeblatt (6) definierten Ebene, zumindest in Richtung einer Bandbreite des Bandsägeblattes (6), verstellbar geführt sind.

8. Bandsägevorrichtung (1) nach einem der vorhergehenden Ansprüche, **dadurch gekennzeichnet, dass** die Führungselemente (16, 17; 18, 19) zwischen sich in Richtung der Sägeblattdicke (20) einen Spalt (33) definieren, dessen Weite (34) zumindest der Sägeblattdicke (20) entspricht oder um bis zu 0,2 mm, insbesondere 0,1 mm größer ist als die Sägeblattdicke (20).

9. Bandsägevorrichtung (1) nach Anspruch 8, **dadurch gekennzeichnet, dass** die Weite (34) des Spaltes (33) zwischen den Führungselementen (16, 17; 18, 19) einstellbar ausgebildet ist.

10. Bandsägevorrichtung (1) nach einem der vorhergehenden Ansprüche, **dadurch gekennzeichnet, dass** die Führungselemente (16 bis 19) ausgewählt sind aus der Gruppe von Rollen, Luftpolster, Platten wie geschliffenen Metallplatten, Hartmetallplatten, Kunststoffplatten.

11. Bandsägevorrichtung (1) nach einem der vorhergehenden Ansprüche, **dadurch gekennzeichnet, dass** zwischen die Führungselemente (16 bis 19) und das Bandsägeblatt (6) ein die auftretende Reibungskraft reduzierendes Mittel eingebracht ist.

12. Bandsägevorrichtung (1) nach einem der vorhergehenden Ansprüche, **dadurch gekennzeichnet, dass** in einem auf der von der Sägeseite (9) abgewendeten und einen rücklaufenden Abschnitt bildenden Bereich des Bandsägeblattes (6) ein Stützelement (23) angeordnet ist, an welchem eine Flachseite (24) des Bandsägeblattes (6) anliegend entlanggleitet.

13. Bandsägevorrichtung (1) nach Anspruch 12, **dadurch gekennzeichnet, dass** das Stützelement (23) in Richtung der Sägeblattdicke (20) verstellbar am Grundrahmen (2) geführt ist.

14. Bandsägevorrichtung (1) nach Anspruch 12 oder 13, **dadurch gekennzeichnet, dass** das Stützelement (23) auf jener Seite des Bandsägeblattes (6) angeordnet ist, welcher der Sägeseite (9) zugewendet ist.
